# EUROPEAN PATENT SPECIFICATION

(11) **EP 0 474 368 B1**
(45) Date of publication and mention of the grant of the patent: **05.10.1994**
(21) Application number: 91307267.4
(22) Date of filing: 07.08.1991
(51) Int. Cl.: B60N 2/36

(54) **A vehicle and split folding backrest for a seat thereof**
Fahrzeug und geteilte Klapprückenlehne für einen Fahrzeugsitz
Véhicule et dossier pliable en deux parties pour un siège de véhicule

(30) Priority: 06.09.1990 GB 9019447
(43) Date of publication of application: 11.03.1992
(73) Proprietor: ROVER GROUP LIMITED, Bickenhill Birmingham B37 7HQ (GB)
(72) Inventor: Featherstone, James Stuart, Burbage, Leicestershire (GB)
(74) Representative: Wilson, Alan Stuart

(56) References cited:
- EP-A- 0 047 699
- DE-A- 3 211 363
- DE-A- 3 316 024
- FR-A- 2 384 646
- PATENT ABSTRACTS OF JAPAN, vol. 8, no. 280 (M-347)(1717) 21 December 1984 & JP-A- 59 149 833 (SHIRAKI) 27 August 1984

## Description

This invention relates to vehicles and split folding backrests for seats thereof, as disclosed in for example DE-A-3316024 corresponding to the preamble of claim 1.

Vehicles with seats having split folding backrests are known in particular as rear seats for use adjacent a rear load compartment of the vehicle. Such seats are used in this way in saloon, hatchback and estate type vehicles. The split divides a pair of adjacent backrest portions, each being individually foldable about one or more hinges along a lower edge thereof between an upright or 'in-use' position and a lowered position where it lies along a floor of the vehicle, sometimes over a seat cushion. In this way long loads can extend from the adjacent load compartment over either or both of the backrest portions, as desired. It is known to split the backrest into portions of equal width or in the ratio, for example 60/40.

The backrest portions, particularly in hatchback or estate vehicles which have no supporting bodywork extending over the backrest, are only supported at outer edges thereof distal from the split by catch means engageable with rigid immovable parts of the vehicle bodywork adjacent the outer edges.

Hence, in the event of sudden braking, a heavy load carried behind the seat in the load compartment will be largely unrestrained from forward movement in the region of the backrest split. Severe loading can thus be transmitted from this region of the backrest through its structure to the catch means. Damage to the backrest may result and/or fracture of the catch means which could allow release of the load into the vehicle passenger compartment.

A further difficulty is that seatbelts cannot be anchored to the backrest in the region of the split because this region of the backrest is unrestrained from forward movement and therefore unsuitable for this purpose.

It is an object of the invention to overcome these and other difficulties of the prior art.

According to a first aspect of the present invention there is provided a split folding backrest for a vehicle seat, including a pair of adjacent backrest portions separated by a split therebetween, each portion being individually foldable about hinge means from an in-use position to a lowered position and being securable in the in-use position by catch means in the region of one edge thereof distal from said split, and wherein the hinge means at least in the region of the split is securable in the in-use position.

Each backrest portion is thus securable in the region of the split, when in its in-use position, therefore allowing greater security from load ingress into the passenger compartment of the vehicle and providing a more secure support for seatbelts.

The securable hinge means and catch means may both be releasable by manually operable release means carried on each backrest portion. A high level of off-line assembly is thus made possible.

Desirably, the release means includes a single release lever to release both said securable hinge means and said catch means.

Movement of said release lever is preferably operable firstly to release said hinge means and secondly to release said catch means.

Movement of a backrest portion from the lowered position to the in-use position is preferably operable to secure said hinge means after engagement of said catch means in order to allow the user to be sure that the hinge means is secured at all times when the catch means is engaged.

For security purposes each backrest portion may include disabling means to render the release means inoperable, the disabling means desirably being operable to render full movement of said manual release lever of the release means ineffective. Added security for a load compartment of the vehicle behind the seat is thus provided.

The release lever of the manual release means may be located on a lateral edge of each backrest portion distal from the split and the disabling means may be located on a face of each backrest portion facing oppositely to a face contacted by a seated passenger.

According to a second aspect of the present invention there is provided a vehicle including a seat having a split folding backrest as hereinbefore described. The split folding backrest may form a division between a passenger compartment and a load carrying compartment of the vehicle and each release means may be operable at least from the passenger compartment to allow easy release of each backrest portion, also to allow entry into the load carrying compartment from within the passenger compartment of the vehicle for use, for example, in inclement weather. For security purposes the disabling means is preferably operable only from the load carrying compartment of the vehicle. The load carrying compartment may be rendered secure from unauthorised attempts to enter same from the passenger compartment of the vehicle.

The present invention will now be described in greater detail by way of example with reference to the accompanying drawing of which:
Figure 1 is a rear elevation of a split folding backrest of a vehicle seat according to the invention,
Figure 2 is a side elevation of the backrest of Figure 1 taken in the direction II,
Figure 3 is a side elevation of a securable seat hinge and part of a backrest portion of the backrest of Figure 1 viewed from one side,
Figure 4 is a side elevation of the hinge and part backrest portion of Figure 3 from the other side,
Figure 5 is a cutaway rear three quarter perspective and schematic view of a motor vehicle having a rear seat with a split folding backrest according to the invention,
Figure 6 is a side elevation of a catch and release mechanism of the backrest of Figure 1, and
Figure 7 is a schematic side elevation of a disabling mechanism of the backrest of Figure 1.

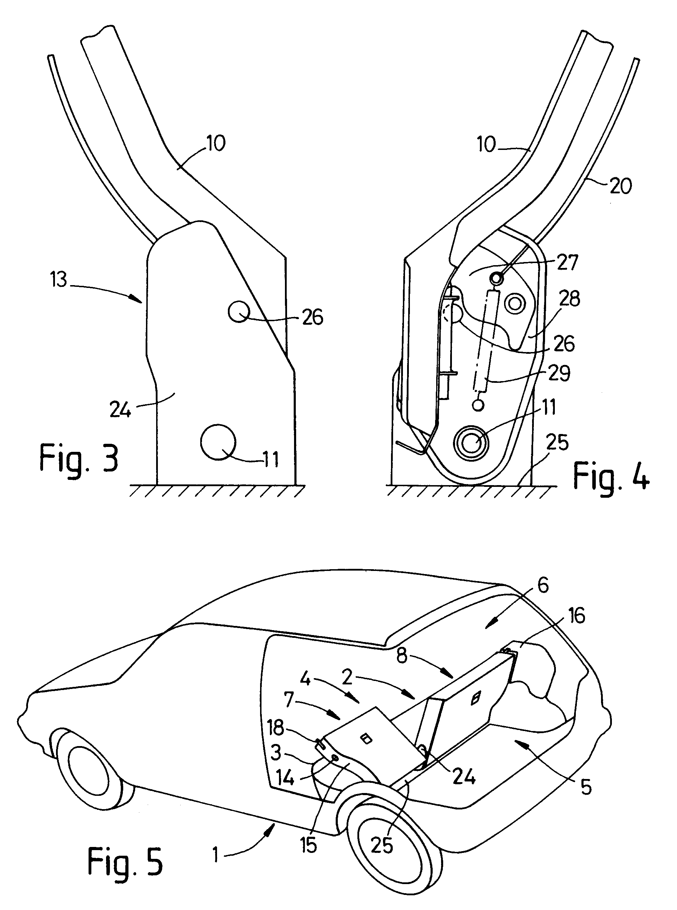

Referring to Figure 5 a vehicle 1 has a rear seat 2 comprising a cushion 3 and a split folding backrest 4. The split folding backrest 4 forms a division between a load carrying compartment 5 and a passenger compartment 6 of the vehicle 1.

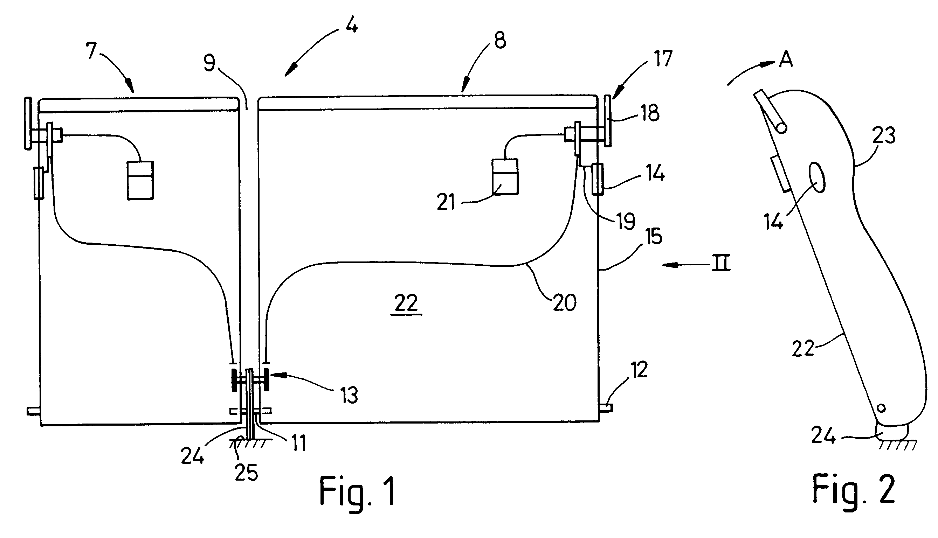

The split folding backrest 4 comprises a smaller folding backrest portion 7 adjacent a larger folding backrest portion 8, the two being separated from each other by a split 9 (see Figure 1) therebetween. Each backrest portion is foldable between a lowered position as shown for portion 7 in Figure 5 and an in-use position as shown for portion 8 in Figure 5.

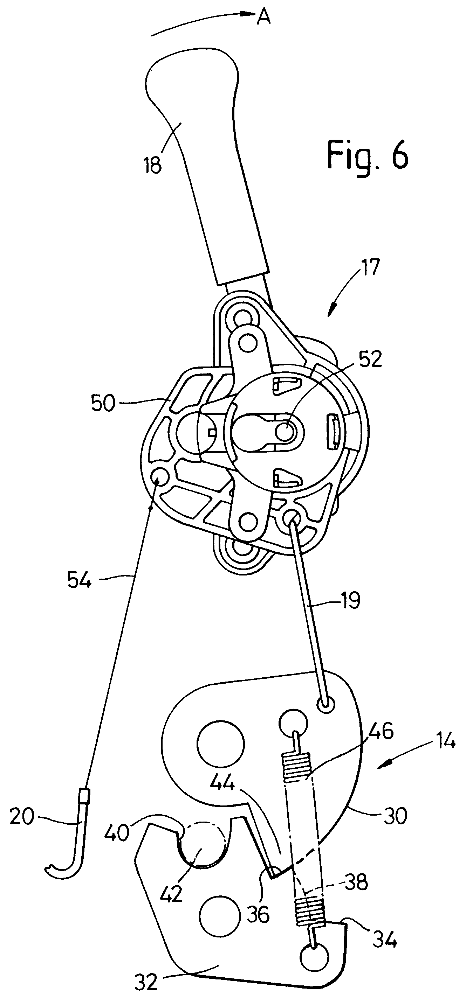

Each backrest portion comprises (shown for larger backrest portion 8 only) a seat pan 10 acting as a support frame for all the constituent parts of the backrest portion. The backrest portion also includes a pair of hinge pins 11, 12 about which the backrest portion hingedly moves between its lowered and in-use positions. Securable hinge means in the form of a centre locking hinge 13 secures the backrest portion in the in use position. The hinge 13 is described in greater detail below with reference to Figures 3 and 4. The backrest portion is also securable in its in-use position by catch means 14 positioned on an edge 15 of the backrest portion distal from the split 9. The catch means 14 are engagable with a rigid immovable part 16 of the vehicle 1 to assist location of the backrest portion when in the in-use position. The centre locking hinge 13 and the catch means 14 are releasable by manually operable release means 17 having a release lever 18 operable from within the passenger compartment 6 of the vehicle. The catch means 14 and release means 17 are as described in greater detail below with reference to Figure 6. The release means 17 is connected to the catch means 14 by a mechanical link 19 and to the centre locking hinge 13 via a Bowden (registered trade mark) cable 20. The manually operable release means 17 is arranged such that movement of the release lever in the direction shown by the arrow A in Figure 2 will firstly release the centre locking hinge 13 and secondly release the catch means 14. This arrangement prevents undue strain occurring to the centre locking hinge mechanism by eliminating the possibility that only the centre locking hinge 13 is engages and supporting the backrest portion 8 at any one time. In a similar fashion, when the backrest portion 8 is moved from the lowered position to the in use position the movement is operable to firstly engage the catch means 14 and secondly engage the centre locking hinge 13.

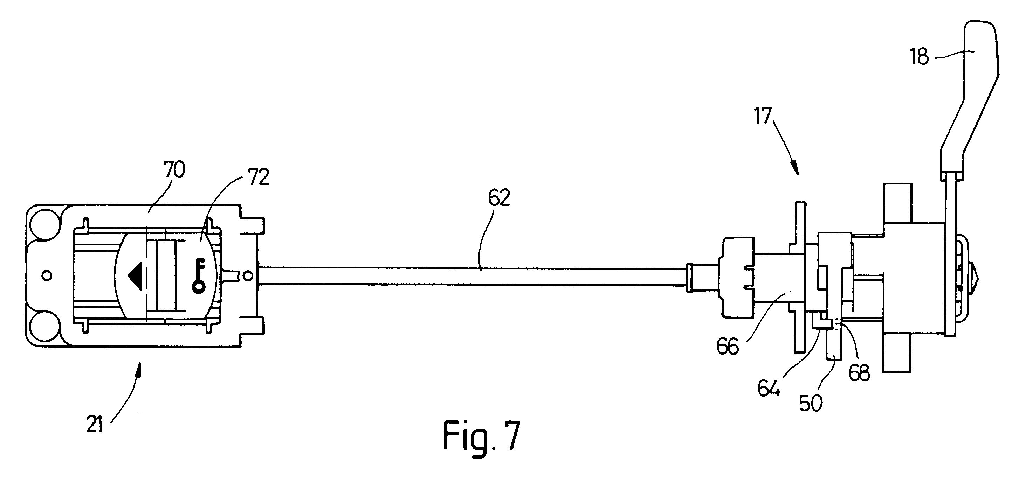

Disabling means having a switch 21 is operable to render movement of the release lever 18 ineffective and thus prevent release of either the catch means 14 or centre locking hinge 13 to allow movement of the backrest portion 8 from the in use to the lowered position to gain access to the load carrying compartment 5 of the vehicle. The switch 21 is situated on a face 22 of the backrest portion 8 facing oppositely to a face 23 of the backrest portion which is contacted by a seated passenger. The disabling means is described in more detail below with reference to Figure 7. If the load carrying compartment 5 is covered by a secure cover (not shown) operation of the switch 21 will only be possible by first gaining authorised access to the load carrying compartment 5 by means of a boot lid or tailgate lid (not shown).

The centre locking hinge 13, as shown in greater detail in Figures 3 and 4, includes an upright 24 fixed to a floor 25 of the vehicle. The upright carries the hinge pin 11 which hingedly supports the backrest portion 8. The upright also carries a locking peg 26 engagable by a locking pawl 27 pivotally carried on a support bracket 28 which is mounted to the seat pan 10. The locking pawl 27 is resiliently held in a position engaged with the locking peg 26 by a spring 29. Release of the locking pawl 27 from the locking peg 26, which allows lowering of the backrest portion 8, is effected by rotation of the release lever 18 in the direction of the arrow which withdraws the locking pawl 27 from the locking peg 26 via the Bowden cable 20. Upon movement of the backrest portion 8 from the lowered to the in-use position the release means 17 is arranged to re-engage before the locking pawl 27 engages the locking peg 26.

The catch means 14 and release means 17 are shown in detail in Figure 6.

The catch means comprises a release pawl 30 and a release catch 32 each rotatably mounted on the side of the backrest portion 8. The release catch 32 has first and second abutments 34, 36 joined by a step 38, and a cutout 40 for engaging with a pin 42 mounted on the immovable part 16 of the vehicle. The release pawl 30 has a tip 44 for engaging either of the abutments 34, 36. A spring 46 urges the release pawl 30 and the release catch 32 together.

The release means 17 comprises a release cam 50 rotatably mounted on a shaft 42 and releasably connected to the release lever 18 as is described below. The cam 50 is joined to the release pawl 30 by a mechanical link in the form of a rod 19, and to an inner wire 54 of the Bowden cable 20.

The catch means 14 is shown in a locked position in which the tip 44 of the release pawl 30 rests on the second abutment 36 on the release catch and the pin 42 is caught in the cutout 40 preventing the backrest portion 8 from tilting.

To release the backrest portion 8, the release lever 18 is moved in the direction of arrow A, thus rotating the cam 50. This pulls on the wire 54 of the Bowden cable and moves the tip 44 of the release pawl 30 across the second abutment 36. The Bowden cable is arranged such that the centre locking hinge 13 is unlocked while the release pawl 30 still engages the second abutment 32.

Then the tip 44 of the release pawl reaches the edge of the second abutment 36 and the release catch 32 rotates under the influence of the spring 46 so that the pin 42 is released and the release pawl 30 engages the first abutment 34. The backrest portion 8 can then be tilted forwards.

When the backrest portion 8 is returned to the in-use position the pin 42 rotates the release catch 32 back towards the locked position shown in Figure 6. Only as the tip 44 of the release pawl reaches the second abutment 36 and slides across it can the release pawl 30 rotate thus releasing the wire 54 of the Bowden cable 20 and allowing the locking hinge 13 to lock.

Referring to Figure 7 the disabling means comprises a switch 21 connected via a Bowden cable 62 to a locking pin 64. The locking pin 64 is rotationally fast with a hollow shaft 66, but can slide axially along it to engage or disengage with a hole 68 through the cam 50. The hollow shaft is rotationally fast with the release lever 18. The locking pin 64 is connected to the Bowden cable 62 which passes through the hollow shaft 66.

The switch 21 comprises a switch body 70 mounted on the backrest portion 8 and a switch knob 72 connected to the Bowden cable 62.

In order to disable the release means 17 the switch knob 72 is moved to the left as shown in Figure 7. The locking pin 64 is then moved in the same direction until it is completely disengaged from the cam 50. Movement of the release lever 18 and hollow shaft 66 then has no effect on the cam 50 and therefore does not release the catch means 14 or the locking hinge 13.

## Claims

1. A split folding backrest for a vehicle seat (2), including a pair of adjacent backrest portions (7, 8) separated by a split (9) therebetween, each portion being individually foldable about hinge means (13) from an in-use position to a lowered position and being securable in the in-use position by catch means (14) in the region of one edge (15) thereof distal from said split, characterised in that the hinge means (13) at least in the region of the split (9) is securable in the in-use position.

2. A split folding backrest according to claim 1, characterised in that the hinge means (13) and catch means (14) are both releasable by manually operable release means (17) carried on each backrest portion (7, 8).

3. A split folding backrest according to claim 2, characterised in that said release means (17) includes a single release lever (18) to release both said hinge (13) means and said catch means (14).

4. A split folding backrest according to claim 3, characterised in that movement of said release lever (18) is operable firstly to release said hinge means (13) and secondly to release said catch means (14).

5. A split folding backrest according to claim 3 or claim 4, characterised in that movement of a said backrest portion (7, 8) from the lowered position to the in-use position is operable to secure said hinge means (13) after engagement of said catch means (14).

6. A split folding backrest according to any of claims 2 to 5, characterised in that the backrest further comprises disabling means (21, 62, 64) to render the release means (17) inoperable

7. A split folding backrest according to any of claims 3 to 6 when including a said release lever (18), characterised in that said disabling means (21, 62, 64) is operable to render full movement of said manual release lever ineffective.

8. A vehicle characterised in that it includes a seat (2) having a split folding backrest according to any of claims 1 to 7, and in that said split folding backrest (14) of said seat forms a division between a passenger compartment (6) and a load carrying compartment (5) of the vehicle.

9. A vehicle according to claim 8, when dependant upon claim 2 characterised in that each said manually operable release means (17) is operable at least from the passenger compartment (6).

10. A vehicle according to claim 8 or claim 9, when dependant upon claim 6, characterised in that said disabling means (21, 62, 64) is operable only from the load carrying compartment.

## Patentansprüche

1. Geteilte umklappbare Rückenlehne für einen Fahrzeugsitz (2), die ein Paar benachbarter Rückenlehnenteile (7, 8) aufweist, die durch einen Spalt (9) voneinander getrennt sind, wobei jeder Teil einzeln aus einer Gebrauchsstellung in eine abgesenkte Stellung um eine Scharniereinrichtung (13) umklappbar und in der Gebrauchsstellung durch eine Rasteinrichtung (14) im Bereich seines von dem Spalt entfernten Randes (15) feststellbar ist, **dadurch gekennzeichnet**, daß die Scharniereinrichtung (13) zumindest im Bereich des Spaltes (9) in der Gebrauchsstellung feststellbar ist.

2. Geteilte umklappbare Rückenlehne nach Anspruch 1, **dadurch gekennzeichnet**, daß sowohl die Scharniereinrichtung (13) als auch die Rasteinrichtung (14) durch eine manuell betätigbare Löseeinrichtung (17) lösbar ist, die jeder Rückenlehnenteil (7, 8) trägt.

3. Geteilte umklappbare Rückenlehne nach Anspruch 2, **dadurch gekennzeichnet**, daß die Löseeinrichtung (17) einen einzigen Lösehebel (18) zum Lösen sowohl der Scharniereinrichtung (13) als auch der Rasteinrichtung (14) aufweist.

4. Geteilte umklappbare Rückenlehne nach Anspruch 3, **dadurch gekennzeichnet**, daß durch die Bewegung des Lösehebels (18) erstens die Scharniereinrichtung (13) und zweitens die Rasteinrichtung (14) gelöst wird.

5. Geteilte umklappbare Rückenlehne nach Anspruch 3 oder Anspruch 4, **dadurch gekennzeichnet**, daß durch Bewegung eines Rückenlehnenteils (7, 8) aus der abgesenkten Stellung in die Gebrauchsstellung die Scharniereinrichtung (13) nach dem Einrücken der Rasteinrichung (14) festgestellt wird.

6. Geteilte umklappbare Rückenlehne nach einem der Ansprüche 2 bis 5, **dadurch gekennzeichnet**, daß die Rückenlehne ferner eine Einrichtung (21, 62, 64) zum Unwirksammachen aufweist, um die Löseeinrichtung (17) funktionsunfähig zu machen.

7. Geteilte umklappabare Rückenlehne nach einem der Ansprüche 3 bis 6, wenn sie einen Lösehebel (18) aufweist, **dadurch gekennzeichnet**, daß die Einrichtung (21, 62, 64) zum Unwirksammachen in der Lage ist, die vollständige Bewegung des manuellen Lösehebels unwirksam zu machen.

8. Fahrzeug, **dadurch gekennzeichnet**, daß es einen Sitz (2), der eine geteilte umklappbare Rückenlehne gemäß einem der Ansprüche 1 bis 7 hat, aufweist, und daß die geteilte umklappbare Rückenlehne (14) des Sitzes eine Trennung zwischen einem Fahrgastraum (6) und einem Laderaum (5) des Fahrzeugs bildet.

9. Fahrzeug nach Anspruch 8, wenn rückbezogen auf Anspruch 2, **dadurch gekennzeichnet**, daß jede manuell betätigbare Löseeinrichtung (17) zumindest vom Fahrgastraum (6) aus betätigbar ist.

10. Fahrzeug nach Anspruch 8 oder Anspruch 9, wenn rückbezogen auf Anspruch 6, **dadurch gekennzeichnet**, daß die Einrichtung (21, 62, 64) zum Unwirksammachen nur vom Laderaum aus betätigbar ist.

## Revendications

1. Dossier pliant en deux parties pour un siège (2) de véhicule, comprenant une paire de parties de dossier voisines (7, 8) séparées par une fente (9) comprise entre celles-ci, chaque partie pouvant être repliée individuellement autour d'un moyen formant charnière (13), depuis une position d'utilisation en une position abaissée, et pouvant être verrouillée dans la position d'utilisation par des moyens d'arrêt (14) situés dans une zone d'un bord (15) de la partie, qui est distal par rapport à ladite fente,
caractérisé en ce que les moyens formant charnière (13) au moins, qui se situent dans la zone de la fente (9), peuvent être verrouillés dans la position d'utilisation.

2. Dossier pliant en deux parties selon la revendication 1, caractérisé en ce que les moyens formant charnière (13) et les moyens d'arrêt (14) peuvent tous deux être déverrouillés à l'aide de moyens de déverrouillage (17) à commande manuelle supportés sur chaque partie de dossier (7, 8).

3. Dossier pliant en deux parties selon la revendication 2, caractérisé en ce que lesdits moyens de déverrouillage (17) comprennent un levier de déverrouillage unique (18) permettant de déverrouiller à la fois lesdits moyens formant charnière (13) et lesdits moyens d'arrêt (14).

4. Dossier pliant en deux parties selon la revendication 3, caractérisé en ce que le mouvement du dit levier de déverrouillage (18) peut effectuer premièrement le déverrouillage des dits moyens de charnière (13) et deuxièmement le déverrouillage des dits moyens d'arrêt (14).

5. Dossier pliant en deux parties selon la revendication 3 ou la revendication 4, caractérisé en ce que le mouvement d'une dite partie de dossier (7, 8) de la position abaissée vers la position d'utilisation peut être effectué en verrouillant lesdits moyens formant charnière (13) après la mise en prise des moyens d'arrêt (14).

6. Dossier pliant en deux parties selon l'une quelconque des revendications 2 à 5, caractérisé en ce que le dossier comprend en outre des moyens de mise hors service (21, 62, 64) destinés à rendre les moyens de déverrouillage (17) inopérants.

7. Dossier pliant en deux parties selon l'une quelconque des revendications 3 à 6, lorsqu'il comprend un dit levier de déverrouillage (18), caractérisé en ce que lesdits moyens de mise hors service (21, 62, 64) peuvent être actionnés de manière à rendre le mouvement total du dit levier de déverrouillage inefficace.

8. Véhicule, caractérisé en ce qu'il comprend un siège (2) comportant un dossier pliant en deux parties selon l'une quelconque des revendications 1 à 7, et en ce que ledit dossier pliant (14) en deux parties constitue une séparation entre un habitacle (6) pour passagers et un compartiment (5) de transport de charges du véhicule.

9. Véhicule selon la revendication 8, lorsque celle-ci dépendant de la revendication 2, caractérisé en ce que chacun des dits moyens de déverrouillage (17) à commande manuelle peut être actionné au moins depuis l'habitacle (6) pour passagers.

10. Véhicule selon la revendication 8 ou la revendication 9, lorsque celle-ci dépendant de la revendication 6, caractérisé en ce que lesdits moyens de mise hors service (21, 62, 64) ne peuvent être actionnés que depuis le compartiment de transport de charges.
